# NEUE EUROPÄISCHE PATENTSCHRIFT

(11) **EP 3 011 153 B2**
(45) Veröffentlichungstag und Bekanntmachung des Hinweises auf die Entscheidung über den Einspruch: **03.03.2021**
(45) Hinweis auf die Patenterteilung: 10.01.2018
(21) Anmeldenummer: 14721828.3
(22) Anmeldetag: 30.04.2014
(51) Int. Cl.: F01N 3/20

(54) **VORRATSTANK MIT HEIZVORRICHTUNG**
STORAGE TANK WITH A HEATING DEVICE
RÉSERVOIR DE STOCKAGE POURVU D'UN DISPOSITIF DE CHAUFFE

(30) Priorität: 21.06.2013 DE 102013211760
(43) Veröffentlichungstag der Anmeldung: 27.04.2016
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2014/058878
(87) Internationale Veröffentlichungsnummer: WO 2014/202268

(56) Entgegenhaltungen:
- WO-A1-2011/086038
- DE-A1-102007 061 808
- DE-A1-102009 046 969
- DE-A1-102011 108 213
- DE-U1-202005 019 499
- JP-A- 2006 144 562

## Beschreibung

### Stand der Technik

Bei Kraftwagen mit Verbrennungsmotor muss aufgrund der Abgasgesetzgebung unter anderem der Schadstoff NOₓ reduziert werden. Eine Methode, die zur Anwendung kommt, ist das sogenannte SCR-Verfahren ("Selective Catalytic Reduction"), bei dem der Schadstoff NOₓ unter zu Hilfenahme von flüssigem Reduktionsmittel zu N₂ und H₂O reduziert wird.

Dazu fördert eine Pumpe das Reduktionsmittel über eine Leitung von einem Tank zu einem Dosiermodul. Dabei wird das Medium entweder saugseitig oder druckseitig gefiltert.

Die in der Regel als Reduktionsmittel verwendete wässrige Harnstofflösung gefriert bei -11 °C und muss daher bei tiefen Temperaturen durch eine Heizung aufgetaut werden. Da eine punktförmige Heizung die Randbezirke des Tanks nicht oder nur schlecht erreicht, ist versucht worden, die Auftauleistung durch eine flächige Heizung, die in Bodennähe im Inneren des Tanks aufgespannt wird, zu vergrößern. Problematisch dabei ist, dass das gefrorene Reduktionsmittel, insbesondere bei einem vollem Tank, eine sehr große Eismasse darstellt. Die Heizung kann dann nur bei einer hohen Oberflächentemperatur das Eis im Bereich um die Heizung auftauen. Bei einer niedrigen Heizungstemperatur reicht die Heizleistung infolge des Wärmeabflusses in die große Eismasse nicht mehr aus, um das heizungsferne Eis zu schmelzen. Die große Eismasse erwärmt sich zwar etwas, für ein generelles Auftauen ist die Heizleistung jedoch zu gering.

In DE 10 2009 046 969 A1 wurde daher vorgeschlagen, die Heizung durch einen Kunststofftopf von der Gesamteismenge abzuschotten. Das Eis wird hier durch eine punktförmige Heizung im Topf aufgetaut und die von der Heizung erzeugte Wärme kann aufgrund der isolierenden Wirkung der Topfwand nicht in die große Eismasse außerhalb des Kunststofftopfes entweichen. Um auch das Eis außerhalb des Kunststofftopfes verflüssigen zu können, hat der Topf in seinem unteren Bereich Öffnungen, durch welche die aufgewärmte Flüssigkeit das Eis, das sich außerhalb des Topfes im Bodenbereich befindet, angreifen kann. Um den Wärmeeintrag von der warmen Flüssigkeit in das Eis effizient zu gestalten, wird der Außenbereich oberhalb der Öffnungen durch einen Isolierkragen von der Gesamteismasse thermisch abgetrennt. Durch das Schwappen der Flüssigkeit im Fahrbetrieb kann die Wärme über die Öffnungen an das Eis unterhalb des Isolierkragens übertragen werden.

DE 10 2011 108 213 A1 beschreibt einen beheizbaren Reduktionsmitteltank, insbesondere zur Versorgung eines auf der Basis der katalytischen Reduktion arbeitenden Abgasreinigungssystems mit flüssigem Reduktionsmittel, wobei der Reduktionsmitteltank oder wenigstens ein Teilbereich des Reduktionsmitteltanks in eine Vielzahl von Kammern unterteilt ist. Jede Kammer weist ein elektrisches Heizelement auf und ist strömungstechnisch mit einer Entnahmestelle, insbesondere mit einer gemeinsamen Entnahmestelle gekoppelt.

### Offenbarung der Erfindung

Eine Aufgabe der Erfindung ist es, einen Vorratstank, wie er in DE 10 2009 046 969 A1 beschrieben worden ist, weiter zu verbessern und das Auftauverhalten des darin gespeicherten Fluids zu optimieren.

Ein Vorratstank für ein Fluid, insbesondere für ein Reduktionsmittel zur Nachbehandlung von Abgasen eines Verbrennungsmotors, gemäß der Erfindung umfasst einen Außenbehälter, der ein Tankvolumen umschließt, wenigstens einen Innenbehälter, der ein inneres Teilvolumen des Tankvolumens begrenzt, wenigstens ein erstes Heizelement, das ausgebildet ist, um Fluid, das sich in dem inneren Teilvolumen befindet, zu erwärmen, sowie eine Entnahmevorrichtung, die es ermöglicht, Fluid aus dem Innenbehälter zu entnehmen. Der Innenbehälter ist von einem Isolierkragen umgeben, der ein äußeres Teilvolumen, das sich außerhalb des inneren Teilvolumens befindet, von dem Tankvolumen abgrenzt. Es ist auch wenigstens ein zweites Heizelement vorgesehen, das ausgebildet ist, um im Betrieb Fluid, das sich in dem zweiten Teilvolumen befindet, zu erwärmen. Das wenigstens eine zweite Heizelement ist in wenigstens einer Nut angeordnet, die im Boden des Vorratstanks ausgebildet ist.

Das erste Heizelement und das zweite Heizelement bilden eine Kaskadenheizung, die es ermöglicht, das Auftauverhalten des in dem Tankvolumen gespeicherten Fluids gezielt zu steuern bzw. zu regeln und bereits nach einer sehr kurzen Auftauzeit eine erste Teilmenge aufgetauten Fluids zur Verfügung zu stellen. Eine im Boden ausgebildete Nut ermöglicht es, die Heizelemente effektiv, sicher und geschützt im Vorratstank zu installieren.

Erfindungsgemäß ist der Innenbehälter, der das innere Teilvolumen umschließt, als nach oben offener Topf ausgebildet. Ein nach oben offener Topf kann einfach entlüftet werden und ermöglicht es, auf einfache Weise zusätzliches Fluid in das innere Teilvolumen einzubringen.

Erfindungsgemäß erstreckt sich der Isolierkragen wenigstens teilweise über den nach oben offenen Topf des Innenbehälters. Ein sich wenigstens teilweise über den nach oben offenen Topf des Innenbehälters erstreckender Isolierkragen verhindert, dass aufgrund von Schwappbewegungen Fluid aus dem inneren Teilvolumen austreten kann, wenn der Tank im Fahrbetrieb bewegt wird.

In einer Ausführungsform ist der Bereich des Isolierkragens, der sich über den nach oben offenen Topf des Innenbehälters erstreckt, trichterförmig ausgebildet. Auf diese Weise kann im Tankvolumen schwappendes Fluid im trichterförmigen Bereich des Isolierkragens gesammelt und dem inneren Teilvolumen zugeführt werden. Dazu ist im trichterförmigen Bereich des Isolierkragens über dem Innenbehälter wenigstens eine Öffnung ausgebildet.

In einer Ausführungsform ist wenigstens ein drittes Heizelement vorgesehen, das ausgebildet ist, um Fluid im Tankvolumen, das sich weder im inneren Teilvolumen noch im äußeren Teilvolumen befindet, zu erwärmen und ggf. aufzutauen. Das Auftauen des Fluids im Tankvolumen kann auf diese Weise unterstützt und beschleunigt werden.

In einer Ausführungsform ist auch das dritte Heizelement in wenigstens einer Nut, die im Boden des Vorratstanks ausgebildet ist, angeordnet. Eine im Boden ausgebildete Nut ermöglicht es, die Heizelemente effektiv, sicher und geschützt im Vorratstank zu installieren.

In einer Ausführungsform ist die Nut auf der Außenseite des Vorratstanks ausgebildet. Eine von außen im Boden des Vorratstanks ausgebildete Nut ermöglicht es darüber hinaus, die Heizelemente bei Bedarf einfach auszutauschen, ohne das Tankvolumen dafür entleeren zu müssen.

In einer Ausführungsform ist die Nut auf der Außenseite des Vorratstanks durch eine thermisch isolierende Abdeckung verschlossen, um einen Wärmeverlust auf der Außenseite des Vorratstanks zu verhindern.

In einer Ausführungsform sind wenigstens der Innenbehälter, das wenigstens eine erste Heizelement und die Entnahmevorrichtung in einer Funktionseinheit integriert, die fluiddicht in den Vorratstank einsetzbar ist. Eine derartige Funktionseinheit, die fluiddicht in dem Außenbehälter des Vorratstanks einsetzbar ist, vereinfacht die Herstellung und Wartung des Vorratstanks. Insbesondere bei Bedarf einfach und schnell ausgetauscht werden, indem die komplette Funktionseinheit ausgewechselt wird.

In einer Ausführungsform ist die Funktionseinheit mit dem Boden des Vorratstanks verschweißt und/oder verschraubt, um eine fluiddichte Verbindung zwischen der Funktionseinheit und dem Boden des Vorratstanks zu schaffen. Eine Verschweißung stellt eine sichere, fluiddichte Verbindung zur Verfügung. Eine Verschraubung ermöglicht es, die Funktionseinheit bei Bedarf einfach auszutauschen.

Die Erfindung wird im Folgenden anhand der beigefügten Figuren näher erläutert.

### Figurenbeschreibung

Figur 1 zeigt eine schematische Ansicht einer Vorrichtung zum Einspritzen eines in einem Tank gespeicherten Reduktionsmittels.
Figur 2 zeigt eine schematische Schnittansicht eines Ausführungsbeispiels eines erfindungsgemäßen Tanks 30.

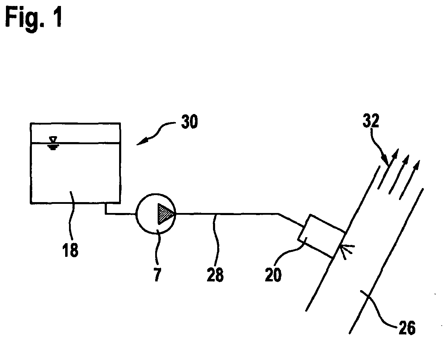

Figur 1 zeigt eine schematische Ansicht einer Vorrichtung zum Einspritzen eines in einem Tank 30 gespeicherten Reduktionsmittels 18, insbesondere einer wässrigen Harnstofflösung, in einen Abgasstrang 26 eines in der Figur 1 nicht gezeigten Verbrennungsmotors, insbesondere eines Dieselmotors.

Im Betrieb wird das Reduktionsmittel 18 dem Tank 30 entnommen und von einer Förderpumpe 7 unter einen Druck von 2 bis 3 bar über eine geeignete Fluidleitung 28 einer unmittelbar am Abgasstrang 26 positionierten Einspritzvorrichtung 20 zugeführt. Die Einspritzvorrichtung 20 spritzt das Reduktionsmittel im Betrieb in den Abgasstrang 26 ein, um es den durch den Abgasstrang 26 strömenden Verbrennungsgasen 32 des in der Figur nicht gezeigten Verbrennungsmotors zuzuführen.

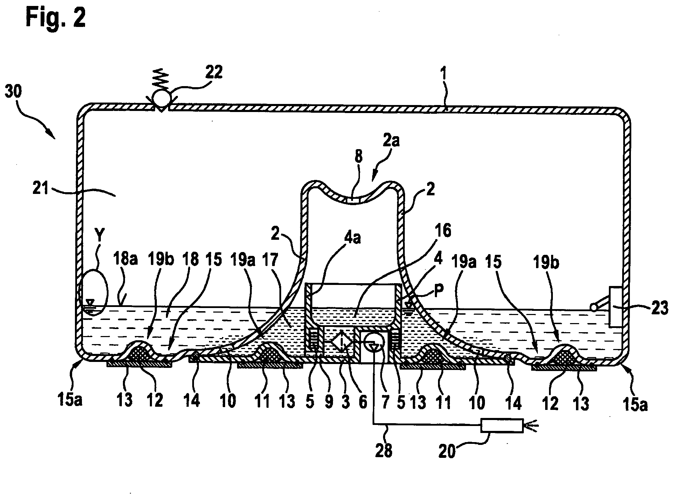

Figur 2 zeigt eine schematische Schnittansicht eines Ausführungsbeispiels eines erfindungsgemäßen Tanks 30 für das Reduktionsmittel 18.

Der Tank 30 hat ein äußeres Gehäuse 1, das ein Tankvolumen 21 umschließt.

Von den Randbereichen 15a des Tankbodens 15 des Gehäuses 1 ausgehend ist ein zur Mitte des Tankvolumens 21 domförmig ansteigender Isolierkragen 2 ausgebildet, der innerhalb des Isolierkragens 2 ein erstes, äußeres Teilvolumen 17 vom Tankvolumen 21 außerhalb des Isolierkragens 2 abgrenzt. Der Isolierkragen 2 weist in seinem unteren Bereich in der Nähe des Tankbodens 15 wenigstens eine Öffnung 10 auf, die eine Fluidverbindung zwischen dem ersten, äußeren Teilvolumen 17 innerhalb des Isolierkragens 2 und dem Tankvolumen 21 außerhalb des Isolierkragens 2 schafft.

Der obere, im Wesentlichen in der Mitte des Tankvolumens 21 angeordnete Bereich 2a des domförmig ausgebildeten Isolierkragens 2 ist trichterförmig ausgebildet. Im Zentrum des trichterförmigen Bereichs 2a ist eine Zentralöffnung 8 ausgebildet, die ebenfalls eine Verbindung zwischen dem ersten Teilvolumen 17, das von dem Isolierkragen 2 umschlossen wird, und dem äußeren Tankvolumen 21 schafft.

Unterhalb des Isolierkragens 2 ist eine Funktionseinheit 3 angeordnet, die beispielsweise durch eine fluiddichte Schweiß- und/oder Schraubverbindung 14 fest mit dem Tankboden 15 des Gehäuses 1 verbunden ist. Die Funktionseinheit 3 begrenzt das unterhalb des domförmigen Isolierkragens 2 ausgebildete erste Teilvolumen 17 fluiddicht nach unten.

In einem mittleren Bereich der Funktionseinheit 3 ist unterhalb des trichterförmigen Bereichs 2a des Isolierkragens 2 ein topfförmiger, nach oben offener Innenbehälter 4 ausgebildet, der ein zweites, inneres, nach oben offenes Teilvolumen 16 begrenzt.

Das zweite, innere Teilvolumen 16 steht über wenigstens eine in einer Wand 4a des topfförmigen Innenbehälters 4 ausgebildete Fluidöffnung 9 in Fluidverbindung mit dem ersten, äußeren Teilvolumen 17, so dass sich im ersten, äußeren Teilvolumen 17 und im zweiten, inneren Teilvolumen 16 ein gleichhoher Fluidpegel P einstellt.

Unterhalb des topfförmig ausgebildeten Innenbehälters 4 ist in der Funktionseinheit 3 eine Fluidentnahmevorrichtung 6, 7 mit einer Filtereinheit 6 und einer Pumpe 7 angeordnet, die ausgebildet und vorgesehen ist, um das Fluid aus dem zweiten, inneren Teilvolumen 16 im topfförmigen Innenbehälter 4 zu entnehmen und an eine externe Einspritzvorrichtung 20, die wie in der Figur 1 gezeigt an einem Abgasstrang 26 angeordnet ist, zu liefern.

Im topfförmigen Innenbehälter 4 ist auch wenigstens ein erstes Heizelement 5 vorgesehen, das ausgebildet ist, um das Fluid, das sich in dem zweiten, inneren Teilvolumen 16 des topfförmigen Innenbehälters 4 befindet, zu erwärmen und ggf. aufzutauen und/oder ein Einfrieren des Fluids in dem zweiten, inneren Teilvolumen 16 zu verhindern.

In radialer Richtung außerhalb des topfförmigen Innenbehälters 4 ist im Boden der Funktionseinheit 3 auf der äußeren, in der Figur 2 unten dargestellten Seite, wenigstens eine um den topfförmigen Innenbehälter 4 umlaufende erste Nut 19a ausgebildet, in der ein zweites Heizelement 11 angeordnet ist. Das zweite Heizelement 11 ist vorgesehen und ausgebildet, um Fluid, das sich im ersten, äußeren Teilvolumen 17 befindet, zu erwärmen und ggf. aufzutauen bzw. ein Einfrieren des Fluids im ersten, äußeren Teilvolumen 17 zu verhindern.

Die erste Nut 19a ist auf ihrer (in der Figur 2 unten dargestellten) Außenseite durch eine thermisch isolierende Abdeckung 13 verschlossen, um ein Austreten von Wärme auf der Unterseite des Gehäuses 1 zu verhindern.

Auch wenn in der Figur 2 nur eine einzige um den topfförmigen Innenbehälter 4 umlaufende erste Nut 19a gezeigt ist, ist für den Fachmann offensichtlich, dass bei Bedarf auch mehrere umlaufende erste Nuten 19a, in denen jeweils ein oder mehrere Heizelemente 11 angeordnet sein können, ausgebildet werden können.

Eine um den domförmig ausgebildeten Isolierkragen 2 umlaufende zweite Nut 19b ist in radialer Richtung außerhalb des domförmigen Isolierkragens 2 und der Funktionseinheit 3 ausgebildet. In der zweiten Nut 19b ist wenigstens ein Heizelement 12 angeordnet, das ausgebildet ist, um das Fluid 18, das sich im Tankvolumen 21 außerhalb des ersten und des zweiten Teilvolumens 17, 16 befindet, zu erwärmen und ggf. aufzutauen und ggf. ein Einfrieren zu verhindern. Auch diese zweite, äußere Nut 19b ist auf der Unterseite des Tankbehälters 1 durch eine isolierende Abdeckung 13 verschlossen, um einen Wärmeverlust auf der Unterseite des Gehäuses 1 zu verhindern.

Im oberen Bereich des Tankbehälters 1 ist ein Entlüftungsventil 22 ausgebildet, durch das Gase aus dem Tankvolumen 21 entweichen können, um das Entstehen eines Überdrucks im Tankvolumen 21 zu verhindern.

Um gefrorenes Fluid 18 aufzutauen, wird zunächst das wenigstens eine erste Heizelement 5, das im topfförmig ausgebildeten Innenbehälter 4 angeordnet ist, aktiviert. Da das zu erwärmende innere Teilvolumen 16 klein ist, wirkt das erste Heizelement 5 sehr schnell und effektiv, so dass gefrorenes Fluid im inneren Teilvolumen 16 sehr schnell aufgetaut wird und als flüssiges Fluid zur Verfügung steht, dass über die Entnahmevorrichtung 6, 7 dem inneren Teilvolumen 16 entnommen und der Einspritzvorrichtung 20 zugeführt werden kann.

Nach dem das Fluid im inneren Teilvolumen 16 aufgetaut worden ist, kann das wenigstens eine erste Heizelement 5 deaktiviert werden, und das wenigstens eine zweite Heizelement 11, das in der ersten Nut 19a angeordnet ist, wird aktiviert, um Fluid 18, das sich im äußeren Teilvolumen 17 befindet, zu erwärmen und aufzutauen.

Aufgetautes Fluid 18 aus dem äußeren Teilvolumen 17 kann über die Öffnung 9 in das innere Teilvolumen 16 strömen, um das von der Fluidentnahmevorrichtung 6, 7 aus dem inneren Teilvolumen 16 entnommene Fluid zu ersetzen.

Der Isolierkragen 2 verhindert, dass die von dem zweiten Heizelement 11 in das Fluid eingebrachte Wärme in das große Volumen des gefrorenen Fluid 18 im äußeren Tankvolumen 21 abgeleitet wird, wodurch das Fluid 18 im äußeren Tankvolumen 21 nur erwärmt, jedoch nicht aufgetaut werden würde.

Der Isolierkragen 2 verhindert außerdem, dass Fluid aus dem ersten oder zweiten Teilvolumen 17, 16 auf die Oberfläche 18a des gefrorenen Fluids 18 im Tankvolumen 21 gelangt und dort erneut gefriert.

Im äußeren Teilvolumen 17 aufgetautes Fluid erwärmt durch die Öffnungen 10, die in dem Isolierkragen 2 ausgebildet sind, punktuell das gefrorene Fluid 18 im Tankvolumen 21 und setzt den Auftauvorgang ausgehend von den Bereichen um die Öffnungen 10 fort. Bei einer Bewegung des Tankbehälters 1 im Fahrbetrieb wird der Auftauvorgang durch Schwappen des bereits aufgetauten Fluids unterstützt.

Der trichterförmig ausgebildete obere Bereich 2a des Isolierkragens 2 verhindert, dass Fluid aus dem inneren Teilvolumen 16 durch Schwappbewegungen in das äußere Tankvolumen 21 entweichen kann. Durch die im trichterförmigen Bereich 2a ausgebildete Öffnung kann jedoch schwappende Flüssigkeit aus dem äußeren Tankvolumen 21 in das innere Teilvolumen 16 gelangen und das innere Teilvolumen 16 und das äußere Teilvolumen 17 können entlüftet werden, so dass Druckunterschiede zwischen dem äußeren Tankvolumen 21 und dem Teilvolumen 16, 17, verhindert werden können.

Das Auftauen des gefrorenen Fluids 18 in den Randbereichen Y des äußeren Tankvolumens 21 kann zusätzlich durch ein optionales drittes Heizelement 12 unterstützt werden, das im Randbereich 15a des Tankbodens 15 außerhalb des Isolierkragens 2 in den Tankboden 15 eingefügt ist, und so wie das zweite Heizelement 11 als elektrisches oder wasserbasiertes Heizelement 12 ausgebildet sein kann.

Das zweite und ggf. das dritte Heizelement 11, 12 bilden im Grunde eine Flächenheizung, die elektrisch (als PTC- oder als Ohmsche Heizung) oder über Kühlwasser beheizt werden kann. Werden das zweite und/oder das dritte Heizelement 11, 12 über Kühlwasser beheizt, so kann jeweils ein (in der Figur 2 nicht gezeigtes) Ventil vorgesehen sein, um es zu ermöglichen, das zweite bzw. dritte Heizelement 11, 12 durch Schließen des Ventils zu deaktivieren, wenn eine ausreichende Temperatur des Fluids im jeweiligen Teilvolumen 17, 21 erreicht worden ist.

Alternativ können die Nuten 19a, 19b mit einem elektrisch leitenden Kunststoff gefüllt sein, um ein PTC- Heizelement 11 zu realisieren.

Über die hier vorgeschlagene Kaskadenheizung mit wenigstens drei Heizelementen 5, 11, 12 kann das Auftauverhalten des Fluids 18 im Tankvolumen 21 gezielt gesteuert und geregelt werden. Anhaltspunkte für die Regelung können die Außentemperatur und/oder die Temperatur des Fluids 18 im Tank sein, die über, in den Figuren nicht gezeigte, Temperatursensoren gemessen werden. Alternativ oder zusätzlich kann im Tankvolumen 21 auch ein Niveausensor 23 vorgesehen sein, der ausgebildet ist, um das Niveau des Fluids 18 im Tankvolumen 21 zu messen und aufgrund vorhandener bzw. nicht vorhandener Schwappbewegungen des Fluids 18, die zu Schwankungen des Fluidniveaus im Tankvolumen 21 führen, festzustellen, ob das Fluid 18 im Tankvolumen 21 gefroren ist oder nicht.

Das erste Heizelement 5 sorgt für eine schnelle Verfügbarkeit der im inneren Teilvolumen 16 gespeicherten Fluidmenge. Ist die Fluidmenge im inneren Teilvolumen 16 aufgetaut, so kann das erste Heizelement 5 deaktiviert, und die Energie stattdessen zum Betreiben des zweiten Heizelements 11 verwendet werden. Das zweite Heizelement 11 wirkt weniger schnell, dafür jedoch umso nachhaltiger. Über die in dem Isolierkragen 2 ausgebildeten Öffnungen 10 und ggf. ein drittes Heizelement 12 kann die Wärme auch die äußersten Bereiche des Tankvolumens 21 erreichen.

Für die Funktion der Erfindung ist von Bedeutung, dass das erste und das zweite Teilvolumen 17, 16, in denen das erste und das zweite Heizelement 5, 11 wirksam sind, nach einer gewissen Auftauzeit durch die Fluidöffnungen 9 in Fluidverbindung miteinander treten dabei aber gegeneinander sowie gegen das Fluid 18 im Tankvolumen 21 thermisch isoliert sind.

## Patentansprüche

1. Vorratstank für ein Fluid (18), insbesondere ein Reduktionsmittel zur Nachbehandlung von Abgasen eines Verbrennungsmotors, umfassend einen Außenbehälter (1), der ein Tankvolumen (21) umschließt, wenigstens einen Innenbehälter (4), der ein inneres Teilvolumen (16) von dem Tankvolumen (21) abgrenzt, wenigstens ein erstes Heizelement (5), das ausgebildet ist, um Fluid (18), das sich in dem inneren Teilvolumen (16) befindet, zu erwärmen; und eine Entnahmevorrichtung (7), die zur Entnahme von Fluid (18) aus dem Innenbehälter (4) ausgebildet ist; wobei der Innenbehälter (4) von einem Isolierkragen (2) umgeben ist, der ein äußeres Teilvolumen (17) vom Tankvolumen (21) abgrenzt; wobei wenigstens ein zweites Heizelement (11) vorgesehen ist, das ausgebildet ist, um im Betrieb Fluid (18), das sich im äußeren Teilvolumen (17) befindet, zu erwärmen, wobei der wenigstens eine Innenbehälter (4) als nach oben offener Topf ausgebildet ist, **dadurch gekennzeichnet, dass**
- das wenigstens eine zweite Heizelement (11, 12) in wenigstens einer Nut (19a, 19b), die im Boden (15) des Vorratstanks ausgebildet ist, angeordnet ist, wobei
- sich der Isolierkragen (2) wenigstens teilweise über den wenigstens einen Innenbehälter (4) erstreckt.

2. Vorratstank nach Anspruch 1, wobei der Bereich (2a) des Isolierkragens (2), der sich über den wenigstens einen Innenbehälter (4) erstreckt, trichterförmig ausgebildet ist.

3. Vorratstank nach Anspruch 1 oder 2, wobei in dem Bereich (2a) des Isolierkragens (2), der sich über den wenigstens einen Innenbehälter (4) erstreckt, wenigstens eine Öffnung (8) ausgebildet ist.

4. Vorratstank nach einem der vorangehenden Ansprüche, wobei wenigstens ein drittes Heizelement (11) vorgesehen ist. das ausgebildet ist, um im Betrieb Fluid (18), das sich Tankvolumen (21) des Außenbehälters (1) außerhalb des inneren Teilvolumens (16) und außerhalb des äußeren Teilvolumens (17) befindet, zu erwärmen.

5. Vorratstank nach Anspruch 4, wobei das dritte Heizelement (11, 12) in wenigstens einer Nut (19a, 19b), die im Boden (15) des Vorratstanks ausgebildet ist. angeordnet ist.

6. Vorratstank nach einem der vorangehenden Ansprüche, wobei wenigstens eine Nut (19a, 19b) auf der Außenseite des Bodens (15) des Vorratstanks ausgebildet und durch eine thermisch isolierende Abdeckung (13) verschlossen ist.

7. Vorratstank nach einem der vorangehenden Ansprüche, wobei der Innenbehälter (4), das wenigstens eine erste Heizelement (5), und die Entnahmevorrichtung (7) in einer Funktionseinheit (3) integnert sind.

8. Vorratstank nach Anspruch 7, wobei die Funktionseinheit (3) mit dem Boden (15) des Vorratstanks verschweißt oder verschraubt ist.

## Claims

1. Supply tank for a fluid (18), in particular a reducing agent for the aftertreatment of exhaust gases of an internal combustion engine, comprising an outer container (1) which encloses a tank volume (21), at least one inner container (4) which sections off an inner part volume (16) from the tank volume (21),
at least one first heating element (5) which is configured to heat fluid (18) which is situated in the inner part volume (16); and
a removal apparatus (7) which is configured to remove fluid (18) from the inner container (4);
the inner container (4) being surrounded by an insulating collar (2) which sections off an outer part volume (17) from the tank volume (21);
at least one second heating element (11) being provided which is configured to heat, during operation, fluid (18) which is situated in the outer part volume (17); the at least one inner container (4) being configured as a pot which is open at the top,
**characterized in that**
- the at least one second heating element (11, 12) is arranged in at least one groove (19a, 19b) which is configured in the bottom (15) of the supply tank,
- the insulating collar (2) extending at least partially beyond the at least one inner container (4).

2. Supply tank according to Claim 1, that region (2a) of the insulating collar (2) which extends beyond the at least one inner container (4) being of funnel-shaped configuration.

3. Supply tank according to Claim 1 or 2, at least one opening (8) being configured in that region (2a) of the insulating collar (2) which extends beyond the at least one inner container (4).

4. Supply tank according to one of the preceding claims, at least one third heating element (11) being provided which is configured to heat, during operation, fluid (18) which is situated the tank volume (21) of the outer container (1) outside the inner part volume (16) and outside the outer part volume (17).

5. Supply tank according to Claim 4, the third heating element (11, 12) being arranged in at least one groove (19a, 19b) which is configured in the bottom (15) of the supply tank.

6. Supply tank according to one of the preceding claims, at least one groove (19a, 19b) being configured on the outer side of the bottom (15) of the supply tank and being closed by way of a thermally insulating cover (13) .

7. Supply tank according to one of the preceding claims, the inner container (4), the at least one first heating element (5) and the removal apparatus (7) being integrated into one functional unit (3).

8. Supply tank according to Claim 7, the functional unit (3) being welded or screwed to the bottom (15) of the supply tank.

## Revendications

1. Réservoir de stockage pour un fluide (18), en particulier pour un agent réducteur pour le post-traitement de gaz d'échappement d'un moteur à combustion interne, comprenant
un récipient extérieur (1) qui entoure un volume de réservoir (21),
au moins un récipient intérieur (4) qui délimite un volume partiel intérieur (16) par rapport au volume de réservoir (21),
au moins un premier élément chauffant (5) qui est réalisé de manière à chauffer du fluide (18) qui se trouve dans le volume partiel intérieur (16) ; et un dispositif de prélèvement (7) qui est réalisé pour prélever du fluide (18) hors du récipient intérieur (4) ;
le récipient intérieur (4) étant entouré par un bord d'isolation (2) qui délimite un volume partiel extérieur (17) par rapport au volume de réservoir (21) ;
au moins un deuxième élément chauffant (11) étant prévu, lequel est réalisé pour chauffer, pendant le fonctionnement, du fluide (18) qui se trouve dans le volume partiel extérieur (17) ;
l'au moins un récipient intérieur (4) étant réalisé sous forme de pot ouvert vers le haut,
**caractérisé en ce que** l'au moins un deuxième élément chauffant (11, 12) est disposé dans au moins une rainure (19a, 19b) qui est réalisée dans le fond (15) du réservoir de stockage,
le bord d'isolation (2) s'étendant au moins en partie sur l'au moins un récipient intérieur (4).

2. Réservoir de stockage selon la revendication 1, dans lequel la région (2a) du bord d'isolation (2), qui s'étend sur l'au moins un récipient intérieur (4), est réalisée en forme d'entonnoir.

3. Réservoir de stockage selon la revendication 1 ou 2, dans lequel, dans la région (2a) du bord d'isolation (2) qui s'étend sur l'au moins un récipient intérieur (4), est réalisée au moins une ouverture (8).

4. Réservoir de stockage selon l'une quelconque des revendications précédentes, dans lequel au moins un troisième élément chauffant (11) est prévu, lequel est réalisé afin de chauffer, pendant le fonctionnement, du fluide (18) qui se trouve le volume de réservoir (21) du récipient extérieur (1) à l'extérieur du volume partiel intérieur (16) et à l'extérieur du volume partiel extérieur (17).

5. Réservoir de stockage selon la revendication 4, dans lequel le troisième élément chauffant (11, 12) est disposé dans au moins une rainure (19a, 19b) qui est réalisée dans le fond (15) du réservoir de stockage.

6. Réservoir de stockage selon l'une quelconque des revendications précédentes, dans lequel au moins une rainure (19a, 19b) est réalisée sur le côté extérieur du fond (15) du réservoir de stockage et est fermée par un recouvrement thermiquement isolant (13) .

7. Réservoir de stockage selon l'une quelconque des revendications précédentes, dans lequel le récipient intérieur (4), l'au moins un premier élément chauffant (5) et le dispositif de prélèvement (7) sont intégrés dans une unité fonctionnelle (3).

8. Réservoir de stockage selon la revendication 7, dans lequel l'unité fonctionnelle (3) est soudée ou vissée au fond (15) du réservoir de stockage.
